# EUROPEAN PATENT SPECIFICATION

(11) **EP 3 789 257 B1**
(45) Date of publication and mention of the grant of the patent: **19.04.2023**
(21) Application number: 19195308.2
(22) Date of filing: 04.09.2019
(51) Int. Cl.: B60T 11/26

(54) **TANK DEVICE, IN PARTICULAR BRAKE FLUID RESERVOIR FOR A HYDRAULIC BRAKE SYSTEM OF A VEHICLE**
TANKVORRICHTUNG, INSBESONDERE EIN BREMSFLÜSSIGKEITSBEHÄLTER FÜR EIN HYDRAULISCHES BREMSSYSTEM EINES FAHRZEUGS
DISPOSITIF DE RÉSERVOIR, EN PARTICULIER UN RÉSERVOIR DE LIQUIDE DE FREIN POUR UN SYSTÈME DE FREINAGE HYDRAULIQUE D'UN VÉHICULE

(43) Date of publication of application: 10.03.2021
(73) Proprietor: Robert Bosch GmbH, 70442 Stuttgart (DE)
(72) Inventor: Stefaniak, Eligiusz, 55-050 Sobotka (PL); Kucharski, Adam, 42-231 Rybna (PL); Janas, Jakub, 52-129 Wroclaw (PL); Dwornikowski, Maksymilian, 56-416 Twardogóra (PL)

(56) References cited:
- EP-A1- 0 340 186
- WO-A1-2018/233378
- FR-A1- 2 848 962
- GB-A- 2 230 831
- KR-A- 20090 078 851
- US-A1- 2004 148 931
- US-A1- 2006 185 361
- US-A1- 2016 052 497

## Description

The present invention pertains to a tank device, in particular a brake fluid reservoir for a hydraulic brake system of a vehicle, the tank device comprises a tank having a tank wall, the tank wall comprising a connection port for mechanically and fluid-technically connecting the tank to the hydraulic brake system, whereby the connection port comprises an actuable valve, the valve being closed in its non-actuated state and opened in its actuated state, the valve further comprises an actuator element that protrudes outside from the tank at least in the non-actuated state of the valve, the actuator element being slidably mounted on the tank wall for actuating the valve.

### Prior art

Tank devices of the above described type are known from the prior art. For example, the laid-open publication EP 0 340 186 A1 discloses a tank device of this type. Common brake fluid reservoirs comprise a tank with a connection port that is designed to connect the tank to a master brake cylinder of an hydraulic brake system of a vehicle. The connection port comprises one or more valves, in particular non-return valves. When the fluid reservoir is detached from the master brake cylinder, the non-return valve or valves ensure that no braking fluid leaves the tank unintentionally. Because the valve usually comprises an actuator element that protrudes outside from the tank so that the valve may be actuated by the master brake cylinder in due course by applying a force on to the actuator element, for example an hydraulic pressure force or a mechanical pressure force, which pushes the actuator element into the tank to open the valve such that brake fluid may flow into the tank.

The laid-open publication FR 2 848 962 A1 discloses a further tank device. For connecting the tank device to a master brake cylinder of a hydraulic brake system, the tank system comprises strap-shaped fastening elements that protrude from a tank of the tank device.

### Summary of the invention

The present invention has the advantage that an unintentional opening of the valve and an intentional loss of brake fluid is prohibited through a cost-efficient and reliable design of the tank. According to the present invention, at least one safety wall is provided that protrudes from the tank wall in the vicinity of the actuator element at least as far as the actuator element in the non-actuated state. Due to this configuration, it is more difficult to reach the actuator element and an actuation of the actuator element through putting the tank down on a table or floor is safely prohibited by the safety wall that would stand on the floor and thus hinder the floor to push the actuator element into the tank.

According to a preferred embodiment of the present invention, two safety walls protrude from the tank wall such that the connection port, in particular the at least one actuator element, is arranged between the safety walls. Thus, it is more difficult to reach the actuator element in between the safety walls such that the likelihood of an unintentional actuation of the valve is further reduced. Preferably, the two safety walls are arranged parallel to one another and protrude from the tank wall equally.

According to a further embodiment of the present invention, the respective safety wall preferably protrudes from the tank wall further than the actuator element in its non-actuated state such that the respective safety wall over reaches the actuator element. This ensures a safety distance defined by the safety wall or safety walls and it becomes even more difficult to actuate the valve by use of the actuator element, in particular unintentionally.

It is particularly preferred that the actuator element is slidable mounted on or in the tank wall such that it can be pushed into the tank for actuating the valve.

Herewith, an easy actuation of the valve is provided when the tank device is correctly assembled for example on the master brake cylinder.

It is preferably provided that the respective safety wall is designed in one piece with the tank wall. The one piece design allows for a cost-efficient manufacturing of the tank device and it provides a reliable and robust safety against the unintentional opening of the valve.

According to an alternative embodiment, the safety wall is preferably attached to the tank wall as separate element, in particular in a detachable manner. The respective safety wall is thus designed as a separate element which is attached, in particular detachable attached to the tank wall. The design as separate element allows for a cost-efficient manufacturing of the safety wall itself and it allows for an easy adjustment of the tank device for different tasks and/or space requirements within a vehicle.

According to a further preferred development, the respective safety wall comprises a curved end such that it surrounds the connection port at least partially. The curved end ensures that the connection port is secured almost from all sides.

The actuator element is preferably slidably mounted in a guiding dome that protrudes from the tank wall as well. In this configuration, the actuator element is arranged slidably within the guiding dome and protrudes from the guiding dome whereby the guiding dome is protected by the at least one safety wall as described before. The guiding dome has the advantage of a stable and reliable moveable arrangement of the valve on/in the tank wall of the tank.

Preferably, the connection port comprises at least two valves and/or at least two actuator elements that protrude from the tank wall. This is of particular advantage if the tank device, in particular the brake fluid reservoir is designed to be attached to a tandem-master cylinder that comprises two hydraulic pressure chambers. In that case, each valve is designed to be connected to one of the hydraulic pressure chambers.

Furthermore, it is particularly preferred that the respective safety wall is assigned to both actuator elements or at least one safety wall is assigned to each actuator element. Hereby, each actuator element is provided with at least one safety wall of its own or the available actuator elements are provided with a common safety wall or two common safety walls as described before.

In the following, the present invention is described with reference to the drawings. In this regard, the drawings show in
- Figure 1: an advantageous tank device in a perspective view,
- Figure 2: a detailed drawing of the tank device in a further perspective view and
- Figure 3: a side view of the tank device.

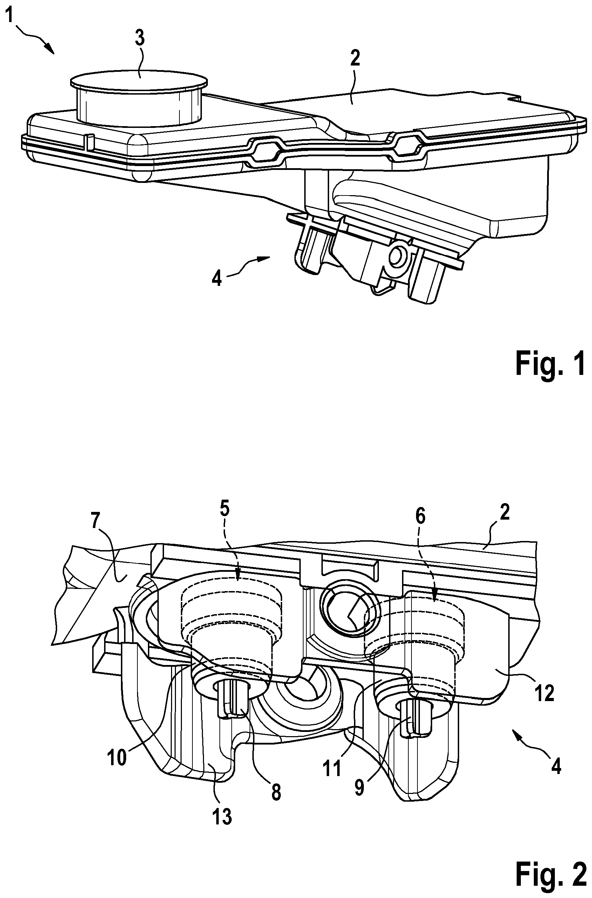

Figure 1 shows a perspective view of an advantageous tank device 1 which comprises a tank 2 for storing, providing and receiving a fluid. According to the exemplary embodiment described herein, the tank 2 is designed as brake fluid reservoir for a brake fluid used in an hydraulic brake system of a vehicle. The tank device 1 further comprises a detachable lid 3 on the upper side which can be detached so that brake fluid may be manually filled into the tank 2. The tank device 1 further comprises a connection port 4 that is arranged on the tank 2 and which is designed to mechanically and fluid-technically attaching/connecting the tank 2 to a brake system, in particular to a master brake cylinder, for example a tandem master brake cylinder of the brake system. The connecting port 4 is arranged on the lower side of the tank 2 such that the lid 3 and the connection port 4 are arranged on the tank 2 on opposing ends.

Figure 2 shows a detailed view of the connection port 4 on the tank 2. The connection port comprises two valves 5, 6 which are arranged within the tank 2 on a lower tank wall 7. Each valve 5, 6 comprises an actuator element 8, 9 that protrudes from the tank wall 7 to the outside of the tank 2. The actuator elements 8, 9 are designed as actuator rods which are arranged essentially perpendicular to the extension of the tank wall 7.

The actuator elements 8, 9 are slidable arranged within conically shaped guide domes 10, 11 that also protrude from the tank wall 7. According to a particularly preferred embodiment, the valves 5, 6 are arranged within the guide domes 10, 11. The actuator elements 8, 9 protrude from the free ends of the guide domes 10, 11 at least in their non-actuated state as shown in figure 2. In the non-actuated state, the valves 5, 6 are closed such that a fluid connection into the tank 2 is sealed such that no fluid from the tank 2 can leave the tank 2 through the connection port 4. By pushing the actuator elements 8, 9 inwards, that means into the tank 2 or the guiding domes 10, 11, the respective valve 5, 6 is opened and braking fluid may leave the tank 2 or flow into the tank 2.

In order to secure the connection port 4 from unintentional actuation of the valves 5, 6, safety walls 12, 13 are provided. The safety walls 12, 13 each protrude from the tank wall 7 essentially parallel to the extension of the actuator elements 8, 9 and they extent at least as far as the actuator elements 8, 9 in their non-actuated state. The safety walls 12, 13 are arranged such that between the safety walls 12, 13 the two actuator elements 8, 9 are arranged. According to the present example, the safety walls 12, 13 both comprise a curved shape in their longitudinal extent such that the connection port 4 is surrounded by the safety walls 12, 13 almost completely.

Because the safety walls 12, 13 protrude from the tank wall 7 at least as far as the actuator elements 8, 9 in their non-actuated state, it is ensured that when the tank device 1 is put down on a floor, table or there like, the actuator elements 8, 9 are not pushed into the tank 2 by mistake. Also, when handling the tank device 1, the safety walls 12, 13 ensure that for example fingers of a person handling the tank device, are not likely to push the actuator elements 8, 9 and thereby actuate the valves 5, 6.

The safety walls 12, 13 therefore guarantee that an unintentional opening of the tank 2 at the connection port 4 is prohibited.

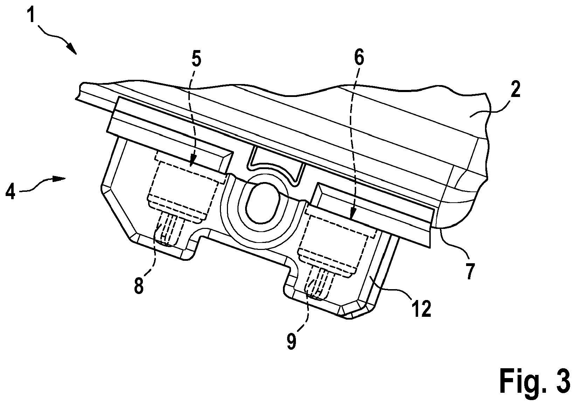

Figure 3 displace the tank device 1 in an enlarged side view of the connection port 4. The guide domes 10, 11 as well as the actuator elements 8, 9 which lie behind the safety wall 12 are drawn with dashed lines to show their arrangement behind the safety wall. The safety walls 12, 13 extent or protrude from the tank wall 7 preferably further than the actuator elements in their non-actuated state such that a safety distance is guaranteed between the end of the safety walls 12, 13 and the actuator elements 8, 9 that makes an unintentionally actuation of the valves 5, 6 even more difficult or unlikely.

The safety walls 12, 13 are preferably designed as separate elements which are attached to the tank wall 7, in particular to the connection port 4. Optionally, the safety walls 12, 13 are detachable arranged on the tank 2 such that they may be interchanged for a different set of safety walls 12, 13 which for example protrudes even further from the tank wall 7. Here through, the tank device 1 can easily be adjusted to different requirements or surroundings. Alternatively, the safety walls 12, 13 are designed in one piece with the tank 2 or with the connection port 4.

## Claims

1. Tank device (1), in particular a brake fluid reservoir for hydraulic brake systems of vehicles, the tank device (1) comprises a tank (2) having a tank wall (7), the tank wall (7) comprising a connection port (4) for mechanically and fluid-technically connecting the tank (2) to the hydraulic brake system, whereby the connection port (4) comprises at least one actuable valve (5,6), the valve (5,6) being closed in its non-actuated state and opened in its actuated state, the valve (5,6) further comprising an actuator element (8,9) that protrudes outside from the tank (2) at least in the non-actuated state of the valve (5,6), the actuator element (8,9) being slidably mounted on the tank (2) for actuating the valve (5,6), **characterized in that** at least one safety wall (12,13) protrudes from the tank wall (7) in the vicinity of the actuator element (8,9) at least as far as the actuator element (8,9) in the non-actuated state.

2. Tank device according to claim 1, **characterized in that** two safety walls (12,13) protrude from the tank wall (7) such that the connection port (4), in particular the actuator element (8,9) is arranged between the safety walls (12,13).

3. Tank device according to one of the preceding claims, **characterized in that** the respective safety wall (12,13) protrudes from the tank wall (7) further than the respective actuator element (8,9) in its non-actuated state.

4. Tank device according to one of the preceding claims, **characterized in that** the respective actuator element (8,9) is slidable mounted such that it can be pushed into the tank (2) for actuating the valve (5,6).

5. Tank device according to one of the preceding claims, **characterized in that** the respective safety wall (12,13) is designed in one piece with the tank wall (7).

6. Tank device according to one of the claims 1 to 4, **characterized in that** the safety wall (12,13) is attached to the tank wall (7) as a separate element, in particular in a detachable manner.

7. Tank device according to one of the preceding claims, **characterized in that** the connection port (4) is designed to be connected to a master brake cylinder, in particular tandem master brake cylinder.

8. Tank device according to one of the preceding claims, **characterized in that** the respective safety wall (12,13) comprises a curved end such that it surrounds the connection port (4) completely or almost completely.

9. Tank device according to one of the preceding claims, **characterized in that** the actuator element (8,9) is slidably mounted in a guiding dome (10,11) that protrudes from the tank wall (7).

10. Tank device according to one of the preceding claims, **characterized in that** the connection port (4) comprises at least two valves (5,6) and/or at least two actuator elements (8,9) that protrude from the tank wall (7).

11. Tank device according to one of the preceding claims, **characterized in that** the respective safety wall (12,13) is assigned to the actuator elements (8,9) or that at least one safety wall (12,13) is assigned to each actuator element (8,9).

## Patentansprüche

1. Tankvorrichtung (1), insbesondere ein Bremsfluidbehälter für hydraulische Bremssysteme von Fahrzeugen, wobei die Tankvorrichtung (1) einen Tank (2) umfasst, der eine Tankwand (7) aufweist, wobei die Tankwand (7) einen Verbindungsanschluss (4) umfasst, um den Tank (2) mechanisch und fluidtechnisch mit dem hydraulischen Bremssystem zu verbinden, wobei der Verbindungsanschluss (4) mindestens ein betätigbares Ventil (5, 6) umfasst, wobei das Ventil (5, 6) im unbetätigten Zustand geschlossen ist und im betätigten Zustand geöffnet ist, wobei das Ventil (5, 6) ferner ein Stellgliedelement (8, 9) umfasst, das zumindest im unbetätigten Zustand des Ventils (5, 6) aus dem Tank (2) vorsteht, wobei das Stellgliedelement (8, 9) verschiebbar am Tank (2) montiert ist, um das Ventil (5, 6) zu betätigen, **dadurch gekennzeichnet, dass** mindestens eine Sicherheitswand (12, 13) in der Nähe des Stellgliedelements (8, 9), zumindest bis zum Stellgliedelement (8, 9) im unbetätigten Zustand, aus der Tankwand (7) vorsteht.

2. Tankvorrichtung nach Anspruch 1, **dadurch gekennzeichnet, dass** zwei Sicherheitswände (12, 13) derart aus der Tankwand (7) vorstehen, dass der Verbindungsanschluss (4), insbesondere das Stellgliedelement (8, 9), zwischen den Sicherheitswänden (12, 13) angeordnet ist.

3. Tankvorrichtung nach einem der vorstehenden Ansprüche, **dadurch gekennzeichnet, dass** die jeweilige Sicherheitswand (12, 13) weiter aus der Tankwand (7) vorsteht als das jeweilige Stellgliedelement (8, 9) im unbetätigten Zustand.

4. Tankvorrichtung nach einem der vorstehenden Ansprüche, **dadurch gekennzeichnet, dass** das jeweilige Stellgliedelement (8, 9) derart verschiebbar montiert ist, dass es zum Betätigen des Ventils (5, 6) in den Tank (2) geschoben werden kann.

5. Tankvorrichtung nach einem der vorstehenden Ansprüche, **dadurch gekennzeichnet, dass** die jeweilige Sicherheitswand (12, 13) mit der Tankwand (7) einstückig ausgestaltet ist.

6. Tankvorrichtung nach einem der Ansprüche 1-4, **dadurch gekennzeichnet, dass** die Sicherheitswand (12, 13) als separates Element, insbesondere lösbar, an der Tankwand (7) befestigt ist.

7. Tankvorrichtung nach einem der vorstehenden Ansprüche, **dadurch gekennzeichnet, dass** der Verbindungsanschluss (4) dazu ausgestaltet ist, mit einem Hauptbremszylinder, insbesondere einem Tandemhauptbremszylinder, verbunden zu sein.

8. Tankvorrichtung nach einem der vorstehenden Ansprüche, **dadurch gekennzeichnet, dass** die jeweilige Sicherheitswand (12, 13) ein gekrümmtes Ende umfasst, sodass es den Verbindungsanschluss (4) vollständig oder fast vollständig umgibt.

9. Tankvorrichtung nach einem der vorstehenden Ansprüche, **dadurch gekennzeichnet, dass** das Stellgliedelement (8, 9) verschiebbar an einer Führungskuppel (10, 11) montiert ist, die von der Tankwand (7) vorsteht.

10. Tankvorrichtung nach einem der vorstehenden Ansprüche, **dadurch gekennzeichnet, dass** der Verbindungsanschluss (4) mindestens zwei Ventile (5, 6) und/oder mindestens zwei Stellgliedelemente (8, 9), die von der Tankwand (7) vorstehen, umfasst.

11. Tankvorrichtung nach einem der vorstehenden Ansprüche, **dadurch gekennzeichnet, dass** die jeweilige Sicherheitswand (12, 13) den Stellgliedelementen (8, 9) zugeordnet ist oder dass mindestens eine Sicherheitswand (12, 13) jedem Stellgliedelement (8, 9) zugeordnet ist.

## Revendications

1. Dispositif de réservoir (1), en particulier un réservoir de liquide de frein pour des systèmes de freinage hydraulique de véhicules, le dispositif de réservoir (1) comprenant un réservoir (2) comportant une paroi de réservoir (7), la paroi de réservoir (7) comprenant un orifice de raccordement (4) pour raccorder mécaniquement et fluidiquement le réservoir (2) au système de freinage hydraulique, l'orifice de raccordement (4) comprenant au moins une valve actionnable (5, 6), la valve (5, 6) étant fermée dans son état non actionné et ouverte dans son état actionné, la valve (5, 6) comprenant, en outre, un élément d'actionnement (8, 9) qui fait saillie hors du réservoir (2) au moins dans l'état non actionné de la valve (5, 6), l'élément d'actionnement (8, 9) étant installé de manière coulissante sur le réservoir (2) pour actionner la valve (5, 6), **caractérisé en ce qu'**au moins une paroi de sûreté (12, 13) fait saillie à partir de la paroi de réservoir (7) à proximité de l'élément d'actionnement (8, 9) au moins aussi loin que l'élément d'actionnement (8, 9) dans l'état non actionné.

2. Dispositif de réservoir selon la revendication 1, **caractérisé en ce que** deux parois de sûreté (12, 13) font saillie à partir de la paroi de réservoir (7) de telle sorte que l'orifice de raccordement (4), en particulier l'élément d'actionnement (8, 9) est disposé entre les parois de sûreté (12, 13).

3. Dispositif de réservoir selon l'une des revendications précédentes, **caractérisé en ce que** la paroi de sûreté (12, 13) respective fait saillie à partir de la paroi de réservoir (7) plus loin que l'élément d'actionnement (8, 9) respectif dans son état non actionné.

4. Dispositif de réservoir selon l'une des revendications précédentes, **caractérisé en ce que** l'élément d'actionnement (8, 9) respectif est installé de manière coulissante de telle sorte qu'il peut être poussé dans le réservoir (2) pour actionner la valve (5, 6) .

5. Dispositif de réservoir selon l'une des revendications précédentes, **caractérisé en ce que** la paroi de sûreté (12, 13) respective est conçue de façon à faire corps avec la paroi de réservoir (7).

6. Dispositif de réservoir selon l'une des revendications 1 à 4, **caractérisé en ce que** la paroi de sûreté (12, 13) est attachée à la paroi de réservoir (7) sous la forme d'un élément distinct, en particulier de manière détachable.

7. Dispositif de réservoir selon l'une des revendications précédentes, **caractérisé en ce que** l'orifice de raccordement (4) est conçu pour être raccordé à un maître-cylindre de frein, en particulier un maître-cylindre tandem.

8. Dispositif de réservoir selon l'une des revendications précédentes, **caractérisé en ce que** la paroi de sûreté (12, 13) respective comprend une extrémité incurvée de telle sorte qu'elle entoure entièrement ou presque entièrement l'orifice de raccordement (4).

9. Dispositif de réservoir selon l'une des revendications précédentes, **caractérisé en ce que** l'élément d'actionnement (8, 9) est installé de manière coulissante dans un dôme de guidage (10, 11) qui fait saillie à partir de la paroi de réservoir (7).

10. Dispositif de réservoir selon l'une des revendications précédentes, **caractérisé en ce que** l'orifice de raccordement (4) comprend au moins deux valves (5, 6) et/ou au moins deux éléments d'actionnement (8, 9) qui font saillie à partir de la paroi de réservoir (7) .

11. Dispositif de réservoir selon l'une des revendications précédentes, **caractérisé en ce que** la paroi de sûreté (12, 13) respective est associée aux éléments d'actionnement (8, 9) ou **en ce qu'**au moins une paroi de sûreté (12, 13) est associée à chaque élément d'actionnement (8, 9) .
